# EUROPÄISCHE PATENTANMELDUNG

(11) **EP 1 447 962 A1**
(43) Veröffentlichungstag der Anmeldung: **18.08.2004**
(21) Anmeldenummer: 03003070.4
(22) Anmeldetag: 12.02.2003
(51) Int. Cl.: H04M 15/00, H04Q 3/00, H04M 17/00

(54) **Verfahren und System zum Bereitstellen von kostenlosen Diensten in einem Telekommunikationsnetzwerk**

(71) Anmelder: SIEMENS AKTIENGESELLSCHAFT, 80333 München (DE)
(72) Erfinder: Ernst, Roland, 36414 Unterbreizbach (DE); Kastl, Petra, 34212 Melsungen Ot Adelshausen (DE); Kuellmar, Wolfgang, 34311 Naumburg (DE); Pforr, Edgar, 99834 Gerstungen (DE)

(57) **Zusammenfassung**

Eine Verfahren und System zum Bereitstellen von kostenlosen Diensten für mindestens einen Telekommunikationsteilnehmer (1) in einem Telekommunikationsnetzwerk wird beschrieben, bei dem Berechtigungsdaten, die zur kostenlosen Nutzung notwendig sind, in eine Tabelle (4) in einem Service-Server (3) eingetragen werden. Möchte ein Mobilfunkgerät (1) den kostenlosen Service nutzen, so wird eine Anfrage mit Anwenderdaten an den Service-server (3) geschickt, der die Anfrage mit den gespeicherten Informationen vergleicht, um eine Berechtigung zu ermitteln. Liegt die Berechtigung des Mobilfunkgerätes (1) zur kostenlosen Nutzung vor, werden weitere Einrichtung des Telekommunikationsnetzwerkes informiert.

## Beschreibung

Die Erfindung betrifft ein Verfahren und eine Vorrichtung zum Bereitstellen eines für Telekommunikationsteilnehmer in einem Telekommunikationsnetz kostenlosen Dienstes.

Geschäfte, Diskotheken oder Ähnliches könnten Kunden Rabatte und Kaufanreize in Form von kostenlosen Text- und Multimedia-Nachrichten, kostenlosem Herunterladen von Spielen, Videosequenzen, Bildern etc. gewähren. So könnte z. B. ein Gast in einer Diskothek beim Kauf eines Getränkes vor einer bestimmten Uhrzeit oder nach dem Ausfüllen eines Frageblattes die Möglichkeit bekommen mit seinem Mobilfunkendgerät eine definierte Anzahl kostenloser Text- bzw. Multimedia-Nachrichten zu senden. Auch in Hotels könnte ein solcher Service zum Bereitstellen kostenloser Text-Nachrichten bzw. ein kostenloser X-Minuten-Anruf attraktiv sein. In einem PSTN-Netz werden Telefonkarten mit einem Code zum Freirubbeln angeboten. Damit der Kunde ein kostenloses Gespräch führen kann, muss er bei seiner Feststation eine Vorwahl für den betreffenden IN-Service (Intelligent Network Service), den Code auf der Telefonkarte und die Rufnummer der Empfangs-Feststation eingeben. Die Telefonkarte wird von einem Hotel, Geschäft usw. gekauft und an einen Kunden bzw. Gast gegeben, damit dieser kostenlos eine bestimmte Anzahl von Minuten telefonieren kann. Kontrolliert wird dies in einem Festnetz durch eine IN-Service Logik. Eine solche Lösung wird bislang jedoch nur in einem Festnetz für Anrufe mit Sprache angeboten.

Aufgabe der vorliegenden Erfindung ist es daher, eine einfache und effiziente Lösung zum Bereitstellen von verschiedensten kostenlosen Diensten in einem Kommunikationsnetz anzubieten.

Die Aufgabe wird erfindungsgemäß durch die Gegenstände der unabhängigen Patentansprüche gelöst. Weiterbildungen der Erfindungen sind in den Unteransprüchen angegeben. Kern der Erfindung ist, dass effizient kostenlose Dienste, wie z. B. Text- und Multimedia-Nachrichten, das Herunterladen von Bildern, Logos, Videosequenzen, etc. für Telekommunikationsteilnehmer in einem Kommunikationsnetz bereitgestellt werden können, indem Daten betreffend eine kostenlose Nutzung von Diensten in eine Tabelle eingetragen werden, bei einer Anfrage von einem Mobilfunkendgerät eines Telekommunikationsteilnehmers die Berechtigung für die kostenlose Nutzung des Dienstes überprüft wird und das Ergebnis der Überprüfung an weitere Netzeinheiten weitergeleitet wird. Ein Vorteil dieser Erfindung ist, dass durch das Angebot eines solchen Services zusätzlicher Umsatz für die Netzbetreiber generiert werden kann.

Die Erfindung wird anhand eines in den Figuren dargestellten Ausführungsbeispiels näher erläutert. Im Einzelnen zeigen
- Figur 1: einen Anrufwähl-Service für Text- und/oder Multimedia-Nachrichten,
- Figur 2: die Bereitstellung von kostenlosen Diensten über eine Infrarot-Schnittstelle und einen Server, der über API verbunden ist,
- Figur 3: das Verarbeiten der kostenlosen Dienste durch einen Service Server.

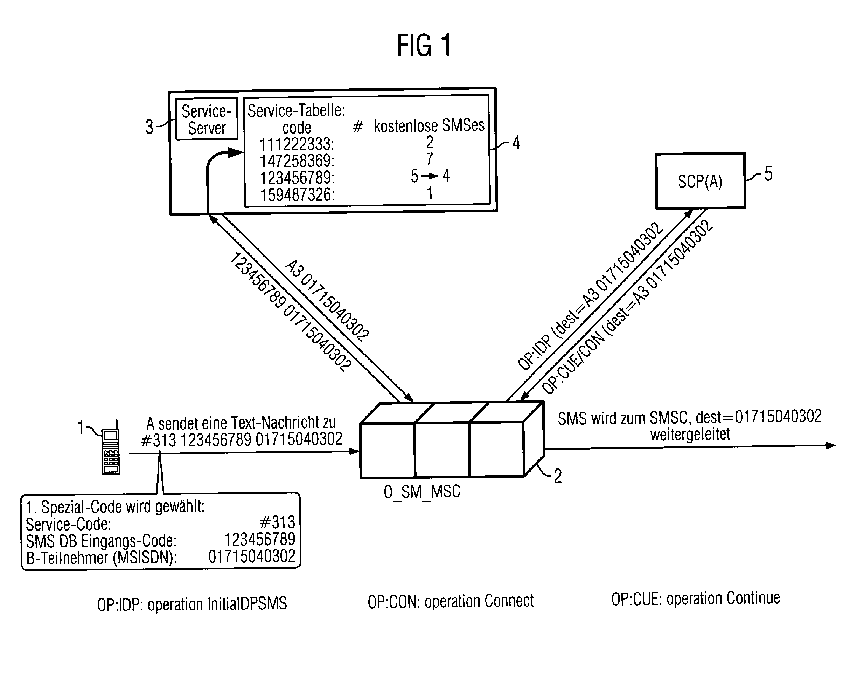

Figur 1 zeigt, wie für einen Telekommunikationsteilnehmer ein Dienst zur kostenlosen Nutzung von Text- und/oder Multimedia-Nachrichten durch einen Service in einem Kommunikationsnetz bereitgestellt werden kann. Im Ausführungsbeispiel wird die Erfindung anhand eines mobilen Kommunikationsnetzes beschrieben, jedoch sind auch andere Kommunikationsnetze, wie z. B. das Festnetz, etc., vorstellbar. Ein Kommunikationsteilnehmer (Nutzer) mit einem Mobilfunkendgerät 1 hat von einer dritten Person Codes für die kostenlose Übermittelung von Text-Nachrichten in einem mobilen Kommunikationsnetz erhalten. Solche dritte Personen können z. B. Hotels, Diskotheken, Geschäfte, etc. sein. Das Mobilfunkendgerät 1 möchte eine Text-Nachricht an ein weiteres Mobilfunkendgerät kostenlos mit Hilfe der Codes senden. Es (1) wählt deshalb vor der Rufnummer des weiteren Mobilfunkendgerätes einen Service-Code, der die Adresse des Services für die Übermittlung von kostenlosen Text-Nachrichten darstellt, und den Code für die Übermittelung kostenloser Text-Nachrichten, der in einer Tabelle 4 verglichen wird und baut die Verbindung in Richtung des weiteren Mobilfunkendgerätes über eine Vermittlungseinrichtung 2 auf. Die zu wählende Nummer eines weiteren Mobilfunkendgerätes könnte daher z. B. folgendermaßen aussehen: #313 (Service Code) 123456789 (Code) 01775040xxx (Rufnummer des weiteren Mobilfunkendgerätes). Die Vermittlungseinrichtung 2 erkennt anhand des Service Codes (dialled Trigger), dass die gewählte Nummer an den Service im Service-Server 3 weiterzuleiten ist. Dieser Service erkennt aufgrund des Service-Codes, dass der Code in einer Tabelle 4 überprüft werden soll. Der Service-Server 3 kontrolliert, ob der übermittelte Code die Berechtigung zur kostenlosen Übermittelung der Text-Nachricht gibt. Wird der Code nicht in der Tabelle 4 gefunden oder gibt der Code keine Berechtigung mehr, so wird dies der Vermittlungseinrichtung 2 mitgeteilt und diese (2) leitet die Text-Nachricht an einen Text-Nachrichten-Server zur Übermittelung weiter. Die Kosten für die Übermittelung trägt dabei das Mobilfunkendgerät 1. Gibt der Code dagegen eine Berechtigung für die kostenlose Übermittelung einer Text-Nächricht könnte der Service-Server eine nicht zu wählende Nummer (A3) als Prefix davor einfügen und diese wieder an die Vermittlungseinrichtung 2 zurückleiten. Diese nicht zu wählende Nummer kann für die Rechnungsstellung an eine dritte Person verwendet werden oder zeigt z. B. der Vermittlungseinrichtung 2 oder einem Service-Kontroll-Punkt 5 eines Prepaid (Vorauszahlung) Services an, dass bereits im Voraus von einer dritten Person bezahlt wurde. Für einen Code können eine Anzahl von kostenlosen Übermittlungen von Text-Nachrichten hinterlegt sein. Wird ein Dienst unter den Code in Anspruch genommen, wird die Anzahl der noch verbleibenden kostenlosen Übermittelungen um Eins reduziert. Nach der Inanspruchnahme aller kostenlosen Übermittlungen wird der Code aus der Tabelle gelöscht. Bevor nun die Text-Nachricht an einen Text-Nachrichten-Server zur Übermittlung weitergeleitet wird, wird das Prefix weggelassen.

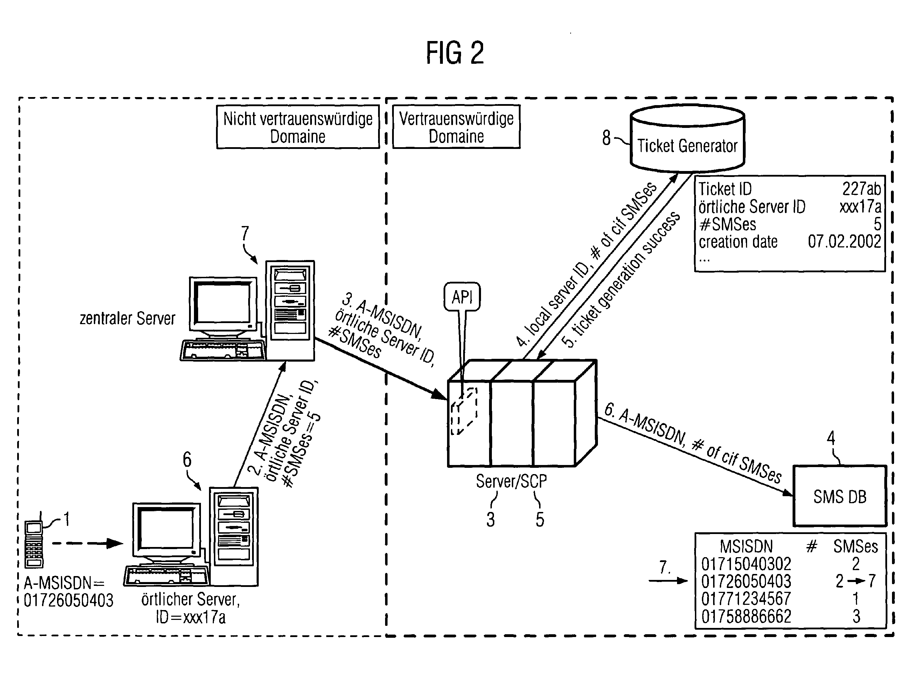

Figur 2 zeigt, wie die Bereitstellung von kostenlosen Diensten über eine Infrarot-Schnittstelle und einen Server, der über ein API-Gateway verbunden ist, geschieht. Für diese Lösung wird ein Service-Server 3 mit einer Tabelle 4 zur Überprüfung der Berechtigung eines Mobilfunkendgerätes 1 zur Übermittlung einer kostenlosen Text-Nachricht verwendet. Der Service-Server 3 könnte Teil eines Service-Kontroll-Punktes 5 sein. Weiterhin wird ein lokaler Server 6, der die Rufnummer (MSISDN) eines Mobilfunkendgerätes 1 über eine Infrarot-Schnittstelle lesen kann, verwendet. Selbstverständlich sind auch andere Übertragungsformen, wie Bluetooth, Kabel, WLAN, etc. denkbar. Der Name des ausführenden Operators wird ebenfalls benötigt. Ein zentraler Server 7 könnte optional für diese Lösung vorhanden sein, falls der lokale Server 6 keinen Zugang zum Service Server 3 in der vertrauenswürdigen Domaine des Operators hat. In einer Rechnungsstellungseinheit 8 geschieht die Rechnungsstellung bei der Verwendung des Dienstes zur kostenlosen Übermittlung von Text-Nachrichten durch ein Mobilfunkendgerät 1 an eine dritte Person, die den Service zur Bereitstellung des kostenlosen Dienstes beauftragt hat.
Ein dialled Trigger (Service Code), der aus einer alphanumerischen Zeichenfolge besteht, wie z. B. #313, muss von einer Vermittlungseinrichtung 2 erkannt werden können, damit der Nutzer des Mobilfunkendgerätes 1 seine freien Transaktionen durchführen kann. Anhand eines vom Nutzer des Mobilfunkendgerätes 1 gewählten Service Code erkennt die Vermittlungseinrichtung 2, dass der Service Server 3 anzusprechen ist (dialled Trigger). Der Service-Server 3 erhält dann z. B. über eine Übermittlungs-Protokoll-Nachricht (SIP), Operation: Initial DPSMS (OP:IDP), die Rufnummer an die die Text-Nachricht gesandt werden soll und die Rufnummer des Service Nutzers. Der Service-Server 3 überprüft die Rufnummer (MSISDN) des Nutzers des Mobilfunkendgerätes 1 in einer Tabelle 4 und macht - bei positivem Prüfergebnis - dies durch z. B. einen Präfix an der gewählten Rufnummer, der Vermittlungseinrichtung 2 kenntlich. Nach Erhalt leitet die Vermittlungseinrichtung 2 die Text-Nachricht zur Übermittlung an einen Text-Nachrichten-Server weiter. Der nicht zu wählende Präfix zeigt an, dass bereits im Voraus von einer dritten Person bezahlt wurde. In dem Netzwerk des Operators können die verschiedenen Server 3, 5 und 8 auch ein einziger Server mit zwei oder drei physikalischen Einheiten sein. Der zentrale Server 7 in der nicht vertrauenswürdigen Domaine soll die Anzahl der direkten Zugriffe zur vertrauenswürdigen Domaine des Netzwerks reduzieren. Er (7) ist optional. Mit dieser Methode sind keine geheimen Codes nötig, sondern lediglich ein allgemein bekannter zu wählender Präfix. Jedoch benötigt ein Geschäft, Hotel oder ähnliches einen lokalen Server und der Inhaber des Mobilfunkendgerätes 1 muss mit der Übermittlung seiner Rufnummer (MSISDN) einverstanden sein. Es könnte auch weitere Vereinbarungen zwischen den Inhaber des Mobilfunkendgerätes 1 und dem Geschäft, etc., wie z. B. den Erhalt von Werbung über Text-Nachrichten an seine (1) Rufnummer, geben. Weiterhin muss die Rufnummer in einer Tabelle 4 im Heimatnetz des Mobilfunkendgerätes 1 über den lokalen 6 und zentralen 7 Server abgelegt werden. Der lokale Server 6 wird meistens nicht direkt mit dem Service Server 3 agieren können und wird daher die Rufnummer und die Anzahl der kostenlosen Text-Nachrichten, die dieses Mobilfunkendgerät 1 erhält, über einen zentralen Server 7 an den Service Server 3 übermitteln. Der zentrale Server 7 ist über ein Gateway (z. B. Open Service Architektur (OSA) oder Service Kontroll Punkt 5 mit dem Service Server 3 verbunden. Das Gateway, der Service Kontroll Punkt 5 oder alternativ auch der Service Server 3 initiiert die Generierung eines Rechnungsstellungs-Tickets bei einem Rechnungsstellungs-Server 8. War diese erfolgreich trägt der Service Server 3 die Rufnummer mit der Anzahl der kostenlosen Text-Nachrichten in eine Tabelle 4 ein. In der Tabelle 4 könnte auch das Ablaufdatum für die Verwendung dieser kostenlosen Text-Nachrichten für das Mobilfunkendgerät 1 enthalten sein. Das Ablaufdatum kann fix, z. B. drei Monate, oder variabel sein. Nach Ablauf des Ablaufdatums wird die Rufnummer mit der Anzahl der freien Text-Nachrichten aus der Tabelle 4 gelöscht. Für jede von einem Mobilfunkendgerät zu sendende Text-Nachricht kann der Service Server 3 in der Tabelle 4 kontrollieren, ob die zu sendende Text-Nachricht kostenlos ist und das Ergebnis einer Vermittlungseinrichtung 2 zur weiteren Bearbeitung mitteilen.

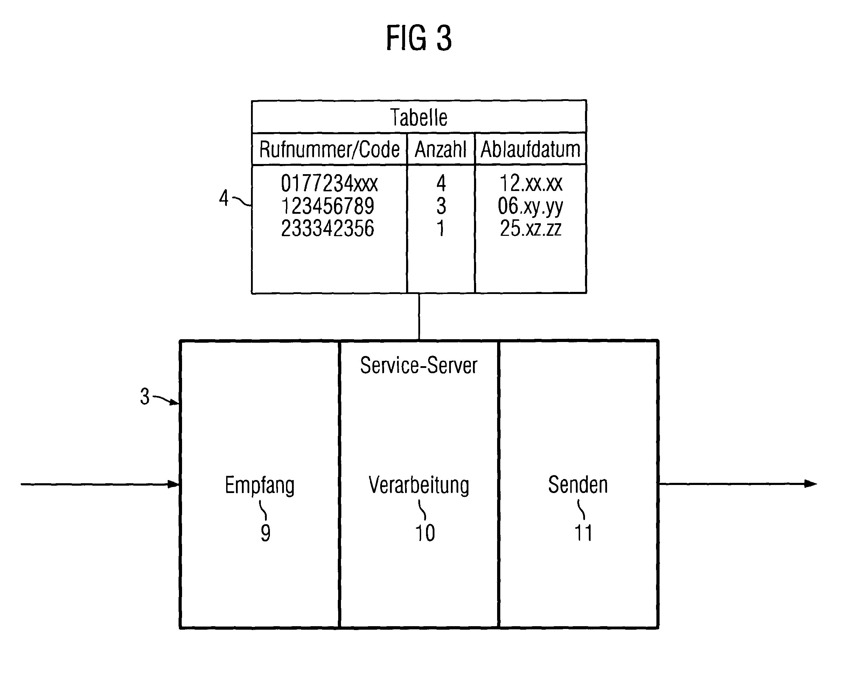

Figur 3 zeigt, wie eine Empfangseinheit 9 eines Service Servers 3 Daten betreffend die Berechtigung für die Nutzung eines kostenlosen Dienstes empfängt und sie an eine Verarbeitungseinheit 10 weiterleitet. Die Verarbeitungseinheit 10 speichert die Daten in einer Tabelle 4. Wenn eine Anfrage für die Verwendung eines kostenlosen Dienste über eine Empfangseinheit 9 zu der Verarbeitungseinheit 10 geleitet wird, überprüft die Verarbeitungseinheit 10 die Anfrage mittels der Daten in der Tabelle 4 und leitet das Ergebnis an eine Sendeeinheit 11 weiter. Die Sendeeinheit 11 leitet das Ergebnis der Überprüfung an andere Netzeinrichtungen weiter.

## Patentansprüche

1. Verfahren zum Bereitstellen eines für mindestens einen Telekommunikationsteilnehmer in einem Telekommunikationsnetz kostenlosen Dienstes,
**dadurch gekennzeichnet,**
**dass** für das Bereitstellen des Dienstes Daten betreffend die Berechtigung zur kostenlosen Nutzung von Diensten in eine Tabelle (4) eingetragen werden,
**dass** bei einer Anfragedaten betreffend die Berechtigung für die kostenlose Nutzung des Dienstes enthaltenden Anfrage eines Mobilfunkendgerätes (1) auf kostenlose Nutzung des Dienstes die eingetragenen Daten in der Tabelle (4) mit den genannten Anfragedaten betreffend die Berechtigung für die Nutzung des kostenlosen Dienstes verglichen werden, um die Berechtigung zur kostenlosen Nutzung des Dienstes zu prüfen und
**dass** im Falle des Vorliegens einer Berechtigung des Mobilfunkendgerätes (1) zur kostenlosen Nutzung des Dienstes Netzeinrichtungen über das Vorliegen der Berechtigung informiert werden.

2. Verfahren nach Anspruch 1,
**dadurch gekennzeichnet,**
**dass** einer Anfrage betreffend die Berechtigung für die kostenlose Nutzung eines Dienstes Informationen betreffend die Adresse des eingetragenen Dienstes im Kommunikationsnetz hinzugefügt wird.

3. Verfahren nach Anspruch 2,
**dadurch gekennzeichnet,**
**dass** als Information eine CAMEL-Indizierungs-Information oder ein dialled-Trigger verwendet wird.

4. Verfahren nach einem der vorhergehenden Ansprüche,
**dadurch gekennzeichnet,**
**dass** als Daten betreffend die Berechtigung für einen kostenlosen Dienst eine Rufnummer des Mobilfunkendgerätes (1) repräsentierende Daten (z. B. IMSI, MSISDN) in die Tabelle (4) eingetragen werden.

5. Verfahren nach einem der vorhergehenden Ansprüche,
**dadurch gekennzeichnet,**
**dass** als Daten betreffend die Berechtigung für einen kostenlosen Dienst ein alpha-numerischer Code in eine Tabelle (4) eingetragen wird.

6. Verfahren nach den Ansprüchen 4 oder 5,
**dadurch gekennzeichnet,**
**dass** die Anzahl der kostenlosen Dienste, die eine Rufnummer und/oder einen Code erhält, in eine Tabelle (4) eingetragen wird.

7. Verfahren nach einem der vorhergehenden Ansprüche,
**dadurch gekennzeichnet,**
**dass** in die Tabelle (4) ein Ablaufdatum für die Inanspruchnahme eines kostenlosen Dienstes für eine Rufnummer und/oder Code eingetragen wird.

8. Verfahren nach einem der vorhergehenden Ansprüche,
**dadurch gekennzeichnet,**
**dass** bei Inanspruchnahme eines kostenlosen Dienstes die verbleibende Anzahl der kostenlosen Dienste um Eins reduziert ist.

9. Verfahren nach einem der vorhergehenden Ansprüche,
**dadurch gekennzeichnet,**
**dass** nach Inanspruchnahme des letzten kostenlosen Dienstes die Rufnummer und/oder Code aus der Tabelle (4) gelöscht wird.

10. Verfahren nach einem der vorhergehenden Ansprüche,
**dadurch gekennzeichnet,**
**dass** als kostenloser Dienst das Versenden von Text-Nachrichten und/oder multimedialen Nachrichten, das Herunterladen von Applikationen, Spielen und/oder Software und/oder zeitlich begrenzte Anwendungen verwendet werden.

11. Verfahren nach einem der vorhergehenden Ansprüche,
**dadurch gekennzeichnet,**
**dass** weitere Netzeinrichtungen, die informiert werden, eine Vermittlungseinrichtung (2), ein Rechnungsstellungs-Server (8) und/oder ein Service-Kontroll-Punkt (5), sind.

12. Verfahren nach einem der vorhergehenden Ansprüche,
**dadurch gekennzeichnet,**
**dass** ein Kommunikationsteilnehmer ein Teilnehmer in einem mobilen Kommunikationsnetz ist.

13. Verfahren nach einem der vorhergehenden Ansprüche,
**dadurch gekennzeichnet,**
**dass** ein Kommunikationsteilnehmer ein Teilnehmer in einem stationären Kommunikationsnetz ist.

14. Verfahren nach einem der vorhergehenden Ansprüche,
**dadurch gekennzeichnet,**
**dass** die Daten betreffend die Berechtigung für den Erhalt eines kostenlosen Dienstes von einem lokalen Server (6) mit Zugang zum Kommunikationsnetz in die Tabelle (4) eingetragen werden.

15. Verfahren nach Anspruch 14,
**dadurch gekennzeichnet,**
**dass** der Zugang über einen zentralen Server (7) mit einem Gateway zum Kommunikationsnetz geschieht.

16. Vorrichtung zum Bereitstellen eines für Telekommunikationsteilnehmer in einem Telekommunikationsnetz kostenlosen Dienstes,
- mit einer Empfangseinheit (9) in einem Service-Server (3) zum Empfangen von Daten betreffend die Berechtigung für die kostenlose Nutzung eines Dienstes,
- mit einer Verarbeitungseinheit (10) zum Eintragen der Daten in eine Tabelle (4) und zum Vergleichen der eingetragenen Daten mit Anfragedaten betreffend die Berechtigung für die kostenlose Nutzung eines Dienstes einer von einem Telekommunikationsteilnehmer erhaltenen Anfrage und
- mit einer Sendeeinheit (11) zum Weiterleiten von Informationen betreffend das Ergebnis des Vergleichs an Netzeinrichtungen bei Berechtigung des Telekommunikationsteilnehmers zur kostenlosen Nutzung des Dienstes.
